# EUROPEAN PATENT APPLICATION

(11) **EP 2 919 464 A1**
(43) Date of publication of application: **16.09.2015**
(21) Application number: 13854106.5
(22) Date of filing: 07.11.2013
(51) Int. Cl.: H04N 19/50, H04N 19/593

(54) **METHOD AND APPARATUS FOR PROCESSING VIDEO SIGNALS**

(30) Priority: 07.11.2012 US 201261723332 P
(71) Applicant: LG Electronics Inc., Yeongdeungpo-gu Seoul 150-721 (KR)
(72) Inventor: SUNG, Jaewon, Seoul 137-724 (KR); YEA, Sehoon, Seoul 137-724 (KR); KOO, Moonmo, Seoul 137-724 (KR); HEO, Jin, Seoul 137-724 (KR); KIM, Taesup, Seoul 137-724 (KR); JUNG, Jiwook, Seoul 137-724 (KR); SON, Eunyong, Seoul 137-724 (KR)
(74) Representative: Diehl & Partner GbR
(86) International application number: PCT/KR2013/010056
(87) International publication number: WO 2014/073873

(57) **Abstract**

According to the present invention, a method for processing video signals is capable of determining an interview motion vector of a current block using an interview motion vector of a neighboring block. To this end, the neighboring blocks of the current block are searched and an interview motion vector candidate list can be generated. According to the present invention, more precise interview motion vector prediction is enabled from among various interview motion vector candidates, and accordingly, coding efficiency can be increased by reducing the amount of transmitted residual data.

## Description

### [Technical Field]

The present invention relates to a method and apparatus for coding video signals.

### [Background Art]

Compression refers to a signal processing technique for transmitting digital information through a communication line or storing the digital information in a form suitable for a storage medium. Compression targets include audio, video and text information. Particularly, a technique of compressing images is called video compression. Multiview video has characteristics of spatial redundancy, temporal redundancy and interview redundancy.

### [Disclosure]

### [Technical Problem]

An object of the present invention is to improve video signal coding efficiency.

### [Technical Solution]

The present invention derives an inter-view motion vector of a current block by searching at least one inter-view motion vector of a neighboring block according to predetermined priority.

In addition, the present invention derives the inter-view motion vector of the current block by generating an inter-view motion vector candidate list including at least one inter-view motion vector of a neighboring block.

Furthermore, the present invention derives the inter-view motion vector of the current block using index information corresponding to an inter-view motion vector candidate.

### [Advantageous Effects]

The present invention can improve video data prediction accuracy using correlation between views by performing inter-view inter prediction using an inter-view motion vector.

In addition, the present invention can increase inter-view inter prediction accuracy by deriving a correct inter-view motion vector using an inter-view motion vector of a neighboring block and to improve coding efficiency by reducing the quantity of transmitted residual data.

### [Description of Drawings]

FIG. 1 is a block diagram of a broadcast receiver to which depth coding is applied according to an embodiment of the present invention.
FIG. 2 is a block diagram of a video decoder according to an embodiment of the present invention.
FIG. 3 illustrates exemplary neighboring blocks with respect to a current block according to an embodiment of the present invention.
FIG. 4 is a flowchart illustrating a first embodiment for acquiring an interview motion vector of a current block from an inter-view motion vector used to code a neighboring block according to an embodiment of the present invention.
FIG. 5 illustrates an exemplary neighboring block coded using an inter-view motion vector according to an embodiment of the present invention.
FIG. 6 illustrates an exemplary temporal neighboring block coded using an inter-view motion vector according to an embodiment of the present invention.
FIG. 7 is a flowchart illustrating a second embodiment for obtaining an interview motion vector of a current block from an inter-view motion vector used to code a neighboring block in a decoder according to an embodiment of the present invention.
FIG. 8 is a flowchart illustrating a process through which an encoder generates index information and transmits the index information to a decoder according to an embodiment of the present invention.
FIG. 9 illustrates an exemplary inter-view motion vector candidate list according to an embodiment of the present invention.

### [Best Mode]

The present invention provides a method and a device for processing video signals, which acquire a first inter-view motion vector from one of a left neighboring block and a lower left neighboring block of a current block, acquire a second inter-view motion vector from one of an upper neighboring block, an upper right neighboring block and an upper left neighboring block of the current block, acquire inter-view motion vector flag information and determine one of the first inter-view motion vector and the second inter-view motion vector as an inter-view motion vector of the current block on the basis of the inter-view motion vector flag information.

The method and device for processing video signals may determine whether the left neighboring block is a block coded using an inter-view motion vector and determine whether the lower left neighboring block is a block coded using an inter-view motion vector when the left neighboring block is not a block coded using an inter-view motion vector.

The method and device for processing video signals may determine whether the upper neighboring block is a block coded using an inter-view motion vector, determine whether the upper right neighboring block is a block coded using an inter-view motion vector when the upper neighboring block is not a block coded using an inter-view motion vector and determine whether the upper left neighboring block is a block coded using an inter-view motion vector when the upper right neighboring block is not a block coded using an inter-view motion vector.

The method and device for processing video signals may, when at least one temporal neighboring block of the current block is a block coded using an inter-view motion vector, acquire a third inter-view motion vector from the temporal neighboring block, and acquire the inter-view motion vector of the current block using one of the first inter-view motion vector, the second inter-view motion vector and the third inter-view motion vector.

The temporal neighboring block may include at least one of a co-located block and a coding block including a neighboring block of the co-located block.

A method and a device for processing video signals search spatial neighboring blocks of a current block for a block coded using an inter-view motion vector, generate an inter-view motion vector candidate list using the inter-view motion vector of the searched spatial neighboring block, acquire index information for obtaining an inter-view motion vector of the current block and acquire the inter-view motion vector of the current block using the inter-view motion vector candidate list and the index information.

The spatial neighboring blocks may include a left neighboring block, an upper neighboring block, an upper right neighboring block, a lower left neighboring block and an upper left neighboring block, and the spatial neighboring blocks of the current block may be searched for a block coded using an inter-view motion vector in the order of the left neighboring block, the upper neighboring block, the upper right neighboring block, the lower left neighboring block and the upper left neighboring block using the inter-view motion vector.

The method and device for processing video signals may search temporal neighboring blocks of the current block for a block coded using an inter-view motion vector and store the inter-view motion vector of the searched temporal neighboring block in the inter-view motion vector candidate list.

The temporal neighboring blocks may include at least one of a co-located block and a coding block including a neighboring block of the co-located block.

### [Modes for Invention]

Techniques for compressing or decoding multiview video signal data consider spatial redundancy, temporal redundancy and inter-view redundancy. In the case of a multiview image, multiview texture images captured at two or more views can be coded in order to generate a three-dimensional image. Furthermore, depth data corresponding to the multiview texture images may be coded as necessary. The depth data can be compressed in consideration of spatial redundancy, temporal redundancy or inter-view redundancy. Depth data is information on the distance between a camera and a corresponding pixel. The depth data can be flexibly interpreted as depth related information such as depth information, a depth image, a depth picture, a depth sequence and a depth bitstream in the specification. In addition, coding can include both the concepts of encoding and decoding in the specification and can be flexibly interpreted within the technical spirit and technical scope of the present invention.

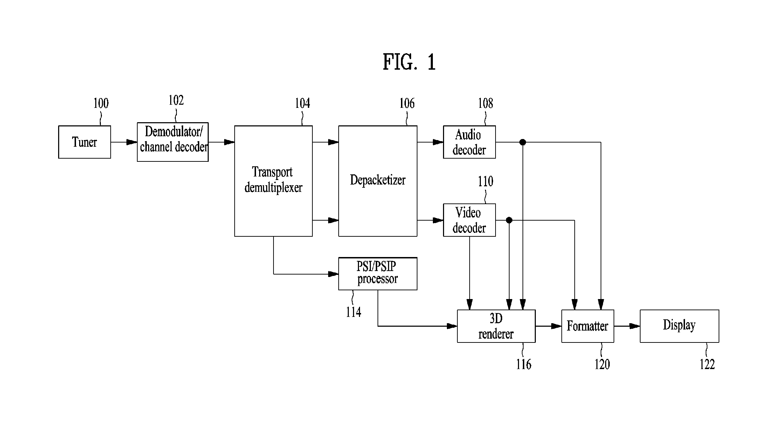

FIG. 1 is a block diagram of a broadcast receiver to which depth coding is applied according to an embodiment to which the present invention is applied.

The broadcast receiver according to the present embodiment receives terrestrial broadcast signals to reproduce images. The broadcast receiver can generate three-dimensional content using received depth related information. The broadcast receiver includes a tuner 100, a demodulator/channel decoder 102, a transport demultiplexer 104, a depacketizer 106, an audio decoder 108, a video decoder 110, a PSI/PSIP processor 114, a 3D renderer 116, a formatter 120 and a display 122.

The tuner 100 selects a broadcast signal of a channel tuned by a user from among a plurality of broadcast signals input through an antenna (not shown) and outputs the selected broadcast signal. The demodulator/channel decoder 102 demodulates the broadcast signal from the tuner 100 and performs error correction decoding on the demodulated signal to output a transport stream TS. The transport demultiplexer 104 demultiplexes the transport stream so as to divide the transport stream into a video PES and an audio PES and extract PSI/PSIP information. The depacketizer 106 depacketizes the video PES and the audio PES to restore a video ES and an audio ES. The audio decoder 108 outputs an audio bitstream by decoding the audio ES. The audio bitstream is converted into an analog audio signal by a digital-to-analog converter (not shown), amplified by an amplifier (not shown) and then output through a speaker (not shown). The video decoder 110 decodes the video ES to restore the original image. The decoding processes of the audio decoder 108 and the video decoder 110 can be performed on the basis of a packet ID (PID) confirmed by the PSI/PSIP processor 114. During the decoding process, the video decoder 110 can extract depth information. In addition, the video decoder 110 can extract additional information necessary to generate an image of a virtual camera view, for example, camera information or information for estimating an occlusion hidden by a front object (e.g. geometrical information such as object contour, object transparency information and color information), and provide the additional information to the 3D renderer 116. However, the depth information and/or the additional information may be separated from each other by the transport demultiplexer 104 in other embodiments of the present invention.

The PSI/PSIP processor 114 receives the PSI/PSIP information from the transport demultiplexer 104, parses the PSI/PSIP information and stores the parsed PSI/PSIP information in a memory (not shown) or a register so as to enable broadcasting on the basis of the stored information. The 3D renderer 116 can generate color information, depth information and the like at a virtual camera position using the restored image, depth information, additional information and camera parameters.

In addition, the 3D renderer 116 generates a virtual image at the virtual camera position by performing 3D warping using the restored image and depth information regarding the restored image. While the 3D renderer 116 is configured as a block separated from the video decoder 110 in the present embodiment, this is merely an exemplary and the 3D renderer 116 may be included in the video decoder 110.

The formatter 120 formats the image restored in the decoding process, that is, the actual image captured by a camera, and the virtual image generated by the 3D renderer 116 according to the display mode of the broadcast receiver such that a 3D image is displayed through the display 122. Here, synthesis of the depth information and virtual image at the virtual camera position by the 3D renderer 116 and image formatting by the formatter 120 may be selectively performed in response to a user command. That is, the user may manipulate a remote controller (not shown) such that a composite image is not displayed and designate an image synthesis time.

As described above, the depth information for generating the 3D image is used by the 3D renderer 116. However, the depth information may be used by the video decoder 110 in other embodiments. A description will be given of various embodiments in which the video decoder 110 uses the depth information.

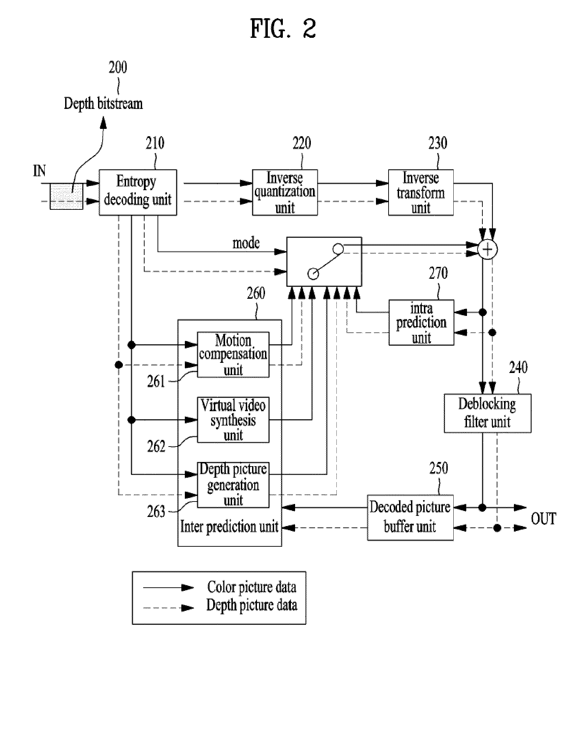

FIG. 2 is a block diagram of the video decoder according to an embodiment to which the present invention is applied.

Referring to FIG. 2, the video decoder 110 may include an entropy decoding unit 210, an inverse quantization unit 220, an inverse transform unit 230, a deblocking filter unit 240, a decoded picture buffer unit 250, an inter prediction unit 260 and an intra prediction unit 270. In FIG. 2, solid lines represent flow of color picture data and dotted lines represent flow of depth picture data. While the color picture data and the depth picture data are separately represented in FIG. 2, separate representation of the color picture data and the depth picture data may refer to separate bitstreams or separate flows of data in one bitstream. That is, the color picture data and the depth picture data can be transmitted as one bitstream or separate bitstreams. FIG. 2 only shows data flows and does not limit operations to operation performed in one decoder.

First of all, to decode a received depth bitstream 200, the depth bitstream 200 is parsed per NAL. Here, various types of attribute information regarding depth may be included in an NAL header region, an extended region of the NAL header, a sequence header region (e.g. sequence parameter set), an extended region of the sequence header, a picture header region (e.g. picture parameter set), an extended region of the picture header, a slice header region, an extended region of the slice header, a slice data region or a macro block region. While depth coding may be performed using a separate codec, it may be more efficient to add attribute information regarding depth only in the case of depth bitstream if compatibility with existing codecs is achieved. For example, depth identification information for identifying a depth bitstream can be added to the sequence header region (e.g. sequence parameter set) or the extended region of the sequence header. Attribute information regarding a depth sequence can be added only when an input bitstream is a depth coded bitstream, according to the depth identification information.

The parsed depth bitstream 200 is entropy-decoded through the entropy decoding unit 210 and a coefficient, a motion vector and the like of each macro block are extracted. The inverse quantization unit 220 multiplies a received quantized value by a predetermined constant so as to obtain a transformed coefficient and the inverse transform unit 230 inversely transforms the coefficient to restore depth information of a depth picture. The intra prediction unit 270 performs intra prediction using the restored depth information of the current depth picture. The deblocking filter unit 240 applies deblocking filtering to each coded macro block in order to reduce block distortion. The deblocking filter unit improves the texture of a decoded frame by smoothing edges of blocks. A filtering process is selected depending on boundary strength and an image sample gradient around a boundary. Filtered depth pictures are output or stored in the decoded picture buffer unit 250 to be used as reference pictures.

The decoded picture buffer unit 250 stores or opens previously coded depth pictures for inter prediction. Here, to store coded depth pictures in the decoded picture buffer unit 250 or to open stored coded depth pictures, frame_num and POC (Picture Order Count) of each picture are used. Since the previously coded pictures may include depth pictures corresponding to views different from the current depth picture, depth view information for identifying views of depth pictures as well as frame_num and POC can be used in order to use the previously coded pictures as reference pictures in depth coding.

In addition, the decoded picture buffer unit 250 may use the depth view information in order to generate a reference picture list for inter-view prediction of depth pictures. For example, the decoded picture buffer unit 250 can use depth-view reference information. The depth-view reference information refers to information used to indicate dependence between views of depth pictures. For example, the depth-view reference information may include the number of depth views, a depth view identification number, the number of depth-view reference pictures, depth view identification numbers of depth-view reference pictures and the like.

The decoded picture buffer unit 250 manages reference pictures in order to implement more flexible inter prediction. For example, a memory management control operation method and a sliding window method can be used. Reference picture management unifies a reference picture memory and a non-reference picture memory into one memory and manages the unified memory so as to achieve efficient management with a small-capacity memory. In depth coding, depth pictures can be separately marked to be discriminated from color pictures in the decoded picture buffer unit and information for identifying each depth picture can be used in the marking process. Reference pictures managed through the aforementioned procedure can be used for depth coding in the inter prediction unit 260.

Referring to FIG. 2, the inter prediction unit 260 may include a motion compensation unit 261, a virtual view synthesis unit 262 and a depth picture generation unit 263.

The motion compensation unit 261 compensates for motion of the current block using information transmitted from the entropy decoding unit 210. The motion compensation unit 261 extracts motion vectors of neighboring blocks of the current block from a video signal and acquires a motion vector prediction value of the current block. The motion compensation unit 261 compensates for motion of the current block using the motion vector prediction value and a differential vector extracted from the video signal. Motion compensation may be performed using one reference picture or a plurality of pictures. In depth coding, motion compensation can be performed using information on a reference picture list for inter-view prediction of depth pictures stored in the decoded picture buffer unit 250 when the current depth picture refers to a depth picture of a different view. Further, motion compensation may be performed using depth view information for identifying the view of the depth picture.

The virtual view synthesis unit 262 synthesizes a color picture of a virtual view using color pictures of neighboring views of the view of the current color picture. To use the color pictures of the neighboring views or to use color pictures of a desired specific view, view identification information indicating the views of the color pictures can be used. When the color picture of the virtual view is generated, flag information indicating whether the color picture of the virtual view is generated can be defined. When the flag information indicates generation of the color picture of the virtual view, the color picture of the virtual view can be generated using the view identification information. The color picture of the virtual view, acquired through the virtual view synthesis unit 262, may be used as a reference picture. In this case, the view identification information can be assigned to the color picture of the virtual view.

In another embodiment, the virtual view synthesis unit 262 can synthesize a depth picture of a virtual view using depth pictures corresponding to neighboring views of the view of the current depth picture. In this case, depth view identification information indicating the view of a depth picture can be used. Here, the depth view identification information can be derived from view identification information of a corresponding color picture. For example, the corresponding color picture can have the same picture output order information and the same view identification information as those of the current depth picture.

The depth picture generation unit 263 can generate the current depth picture using depth coding information. Here, the depth coding information may include a distance parameter indicating a distance between a camera and an object (e.g. a Z-coordinate value on a camera coordinate system or the like), macro block type information for depth coding, information for identifying a boundary in a depth picture, information indicating whether data in RBSP includes depth-coded data, information indicating whether a data type is depth picture data, color picture data or parallax data and the like. In addition, the current depth picture may be predicted using the depth coding information. That is, inter prediction using neighboring depth pictures of the current depth picture can be performed and intra prediction using decoded depth information in the current depth picture can be performed.

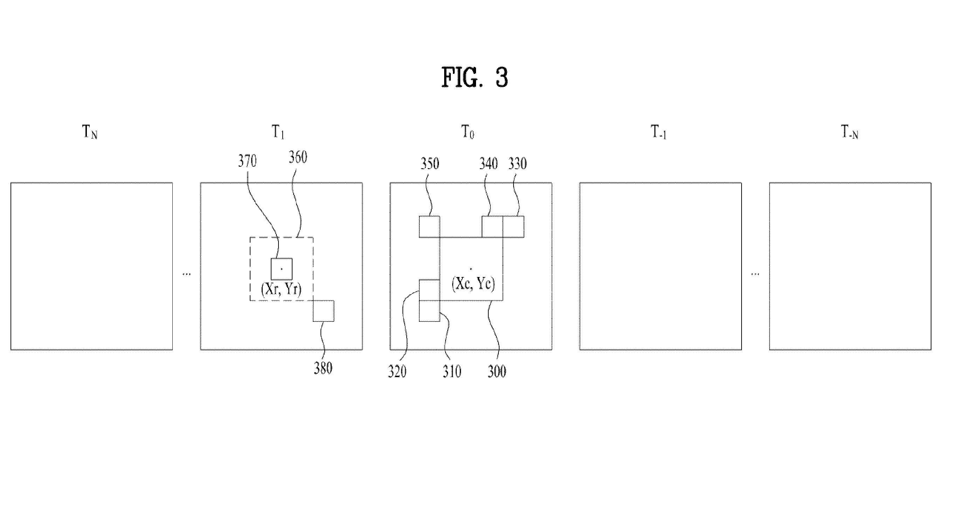

A description will be given of neighboring blocks with respect to a current block according to the present invention with reference to FIG. 3.

FIG. 3 illustrates exemplary neighboring blocks with respect to the current block according to an embodiment to which the present invention is applied.

Neighboring blocks are blocks adjacent to a current block 300 and may be classified into a spatial neighboring block and a temporal neighboring block.

The spatial neighboring block is located around the current block 300 in a current picture and may include a lower left neighboring block 310, a left neighboring block 320, an upper right neighboring block 330, an upper neighboring block 340 and an upper left neighboring block 350, as shown in FIG. 3.

The temporal neighboring block is a block included in a co-located block 360 or located around the co-located block 360 and may include a co-located center block 370 and a lower right neighboring block 380 of the co-located block 360. Here, the co-located block 360 can be defined as a block including a pixel position (Xr, Yr) of a reference picture, which corresponds to the position (Xc, Yc) of the center pixel of the current block 300. Otherwise, the co-located block 360 may be defined as a block including a position in the reference picture, which corresponds to the position of an upper left pixel of the current block 300. The reference picture may refer to a picture corresponding to the same view as the current picture including the current block 300 and to a different time from the current picture. The co-located center block 370 is a block including the center pixel of the co-located block 360. The lower right neighboring block 380 of the co-located block 360 is a block including a lower right pixel of the co-located block 360.

The present invention proposes a method for acquiring an inter-view motion vector of the current block using inter-view motion vectors that have been used to code the aforementioned neighboring blocks. A description will be given of a first embodiment for acquiring the inter-view motion vector of the current block.

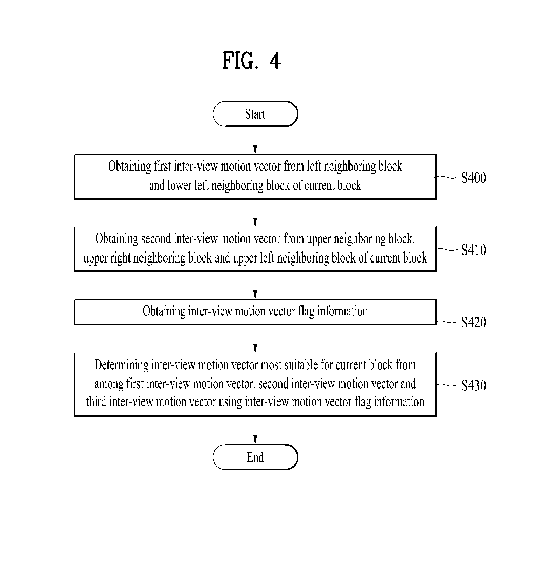

FIG. 4 is a flowchart illustrating a first embodiment for acquiring the inter-view motion vector of the current block from an inter-view motion vector used to code a neighboring block in accordance with an embodiment of the present invention.

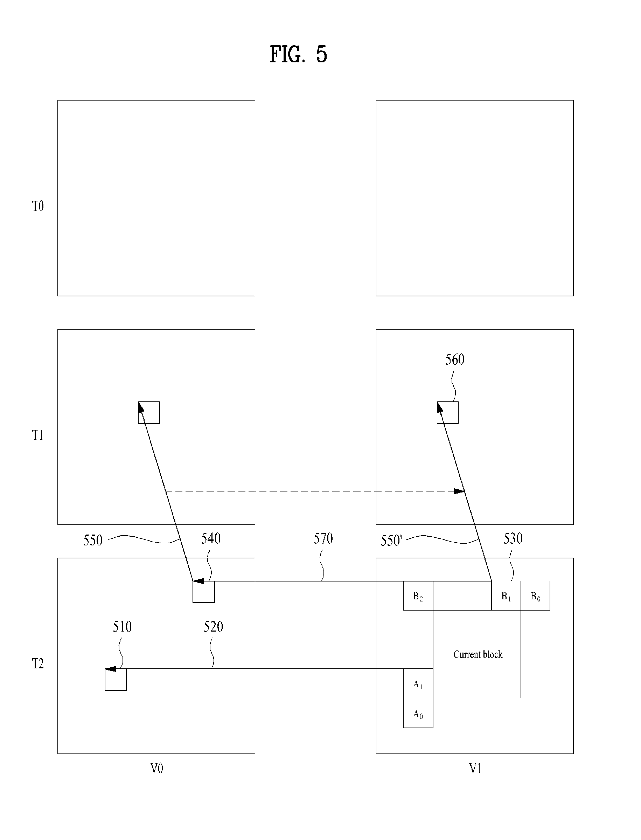

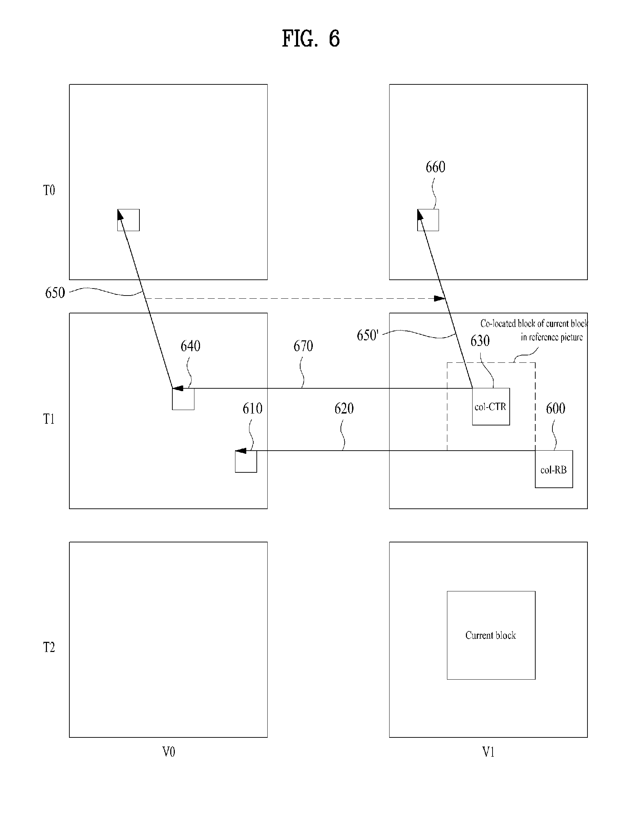

Referring to FIG. 4, when a left neighboring block and a lower left neighboring block of the current block have been coded using inter-view motion vectors, a first interview motion vector may be acquired from one of the left neighboring block and the lower left neighboring block (S400). Specifically, whether the left neighboring block and the lower left neighboring block are blocks coded using inter-view motion vectors can be checked in a predetermined order and the first inter-view motion vector can be acquired from a block coded using an inter-view motion vector. Here, the block coded using an inter-view motion vector may refer to an inter-view prediction block or a reference view temporal prediction block. The inter-view prediction block refers to a block coded using a reference block of a different view, which is obtained through an inter-view motion vector. The reference view temporal prediction block refers to a block coded using a temporal motion vector obtained using an inter-view motion vector. Examples of the inter-view prediction block and the reference view temporal prediction block will be described in detail with reference to FIGS. 5 and 6.

For example, when the left neighboring block is a block coded using an interview motion vector, the inter-view motion vector used to code the left neighboring block can be stored as the first inter-view motion vector. When the left neighboring block is not a block coded using an inter-view motion vector, whether the lower left neighboring block is a block coded using an inter-view motion vector can be checked. When the lower left neighboring block is a block coded using an inter-view motion vector, the inter-view motion vector used to code the lower left neighboring block can be stored as the first interview motion vector.

When an upper neighboring block, an upper right neighboring block and an upper left neighboring block of the current block are blocks coded using inter-view motion vectors, a second inter-view motion vector can be acquired from one of the upper neighboring block, the upper right neighboring block and the upper left neighboring block (S410). Specifically, whether the upper neighboring block, the upper right neighboring block and the upper left neighboring block are blocks coded using inter-view motion vectors can be checked in a predetermined order and the second inter-view motion vector can be acquired from a block coded using an inter-view motion vector. For example, when the upper neighboring block is a block coded using an inter-view motion vector, the inter-view motion vector used to code the upper neighboring block can be stored as the second interview motion vector. When the upper neighboring block is not a block coded using an interview motion vector, whether the upper right neighboring block is a block coded using an inter-view motion vector can be checked. When the upper right neighboring block is a block coded using an inter-view motion vector, the inter-view motion vector used to code the upper right neighboring block can be stored as the second inter-view motion vector. When the upper right neighboring block is not a block coded using an inter-view motion vector, whether the upper left neighboring block is a block coded using an inter-view motion vector can be checked. When the upper left neighboring block is a block coded using an inter-view motion vector, the inter-view motion vector used to code the upper left neighboring block can be stored as the second inter-view motion vector.

Inter-view motion vector flag information can be acquired (S420). The interview motion vector flag information may include information for determining an inter-view motion vector most suitable for the current block between the first inter-view motion vector and the second inter-view motion vector.

The inter-view motion vector most suitable for the current block can be determined between the first inter-view motion vector and the second inter-view motion vector using the inter-view motion vector flag information (S430).

The current block can be decoded using the determined inter-view motion vector of the current block.

A description will be given of examples of neighboring blocks coded using inter-view motion vectors with reference to FIGS. 5 and 6.

FIG. 5 illustrates an exemplary spatial neighboring block coded using an interview motion vector according to an embodiment of the present invention.

Referring to FIG. 5, a left neighboring block 500 of a current block is an interview prediction block, which has been coded through inter-view prediction (or inter-view inter-prediction). Here, inter-view prediction refers to inter prediction using a pixel value of a reference block in a reference picture, which is located at a different view from the current block, in order to obtain a predicted value of the current block. A reference block 510 of the left neighboring block can be specified using an inter-view motion vector 520 of the left neighboring block. The inter-view motion vector 520 of the left neighboring block is a vector indicating, at an upper left pixel of the left neighboring block 500, an upper left pixel of the reference block 510 of the left neighboring block.

An upper neighboring block 530 of the current block is a reference view temporal inter prediction block, which has been coded through reference view temporal inter-prediction. Here, the reference view temporal inter prediction is temporal inter prediction using a temporal motion vector acquired using an inter-view motion vector. A corresponding block 540 of the upper neighboring block is a block located at a different view from the current block and coded using temporal inter prediction. A reference block 560 of the upper block 530 can be obtained using a temporal motion vector 550 of the corresponding block of the upper neighboring block 530. A vector indicating, at an upper left pixel of the upper neighboring block 530, an upper left pixel of the corresponding block 540 is an inter-view motion vector 570 of the upper neighboring block.

FIG. 6 illustrates an exemplary temporal neighboring block coded using an inter-view motion vector according to an embodiment of the present invention.

Referring to FIG. 6, a lower right neighboring block (col-RB) 600 with respect to a co-located block of the current block in a reference picture is an inter-view prediction block, which has been coded through inter-view prediction. A reference block 610 of the lower right neighboring block can be specified using an inter-view motion vector 620 of the lower right neighboring block. The inter-view motion vector 620 of the lower right neighboring block is a vector indicating, at an upper left pixel of the lower right neighboring block 600, an upper left pixel of the reference block 610 of the lower right neighboring block.

A co-located center block (col-CTR) 630 is a reference view temporal inter prediction block, which has been coded through reference view temporal inter prediction. A corresponding block 640 of the co-located center block is a block located at a different view from the current block and coded using temporal inter prediction. A reference block 660 of the co-located center block 630 can be obtained using a temporal motion vector 650 of the corresponding block of the co-located center block. A vector indicating, at an upper left pixel of the co-located center block 630, an upper left pixel of the corresponding block 640 becomes an inter-view motion vector 670 of the co-located center block.

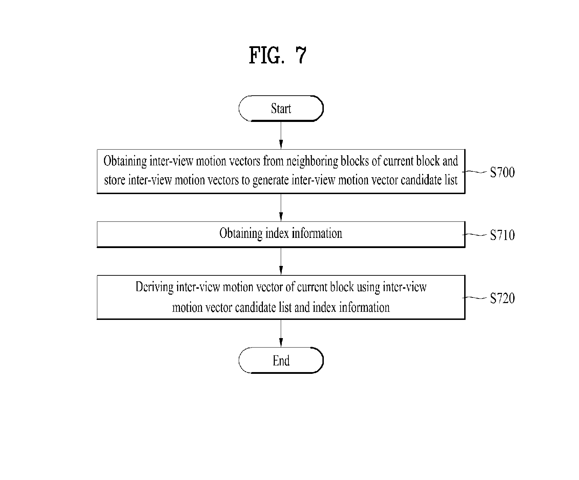

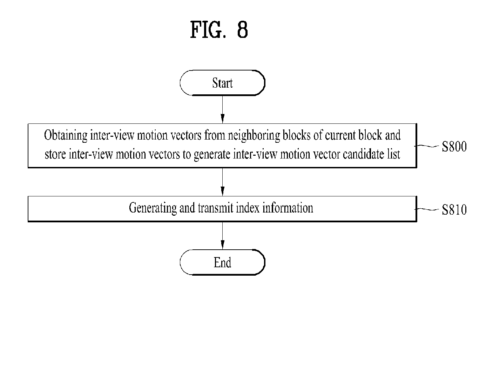

A description will be given of a second embodiment for obtaining the interview motion vector of the current block with reference to FIGS. 7 and 8.

FIG. 7 is a flowchart illustrating the second embodiment for obtaining the interview motion vector of the current block from an inter-view motion vector used to code a neighboring block in a decoder in accordance with an embodiment of the present invention.

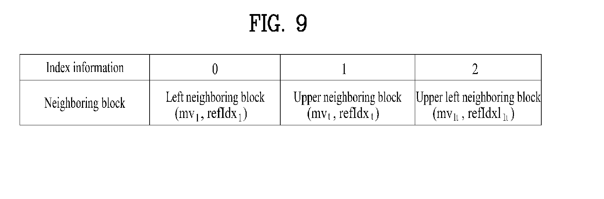

Neighboring blocks of the current block may be sequentially searched and inter-view motion vectors may be sequentially acquired from the neighboring blocks to generate an inter-view motion vector candidate list (S700). Here, the inter-view motion vector candidate list is a list capable of storing inter-view motion vectors used to code the neighboring blocks. The inter-view motion vectors included in the inter-view motion vector candidate list can be candidates for the inter-view motion vector of the current block. An example of the inter-view motion vector candidate list will be described with reference to FIG. 9.

Priority of search of neighboring blocks can be set in various manners. For example, temporal neighboring block search can precede spatial neighboring block search, spatial neighboring block search can precede temporal neighboring block search, or only spatial neighboring blocks or only temporal neighboring blocks can be searched.

In the case of temporal neighboring blocks, a co-located center block can be searched and then a lower right neighboring block with respect to a co-located block can be searched, the lower right neighboring block with respect to the co-located block can be searched and then the co-located center block can be searched, or only one of the co-located center block and the lower right neighboring block of the co-located block can be searched.

In the case of spatial neighboring blocks, a left neighboring block, an upper neighboring block, an upper right neighboring block, a lower left neighboring block and an upper left neighboring block can be sequentially searched. Alternatively, only part of the spatial neighboring blocks may be searched. For example, only the left neighboring block and the upper neighboring block can be searched.

Priority of search of neighboring blocks can be set in various manners and is not limited to the aforementioned examples.

Index information for obtaining the inter-view motion vector of the current block can be acquired (S710). Here, the index information may be information indicating an inter-view motion vector included in the inter-view motion vector candidate list used to obtain the inter-view motion vector of the current block. The index information can be acquired from a bitstream transmitted from an encoder. An example in which the encoder generates the index information and transmits the index information to the decoder will be described in detail with reference to FIG. 8.

A motion compensation unit of the decoder can acquire a most suitable interview motion vector from among the inter-view motion vector candidates in the inter-view motion vector candidate list.

The inter-view motion vector of the current block can be determined using the inter-view motion vector candidate list and the index information (S720). The inter-view motion vector included in the inter-view motion vector candidate list and indicated by the index information can be determined as the inter-view motion vector of the current block. Alternatively, an inter-view motion vector used to code a neighboring block and indicated by the index information can be determined as the inter-view motion vector of the current block.

A description will be given of a process through which the encoder generates and transmits the index information with reference to FIG. 8.

FIG. 8 is a flowchart illustrating the process through which the encoder generates the index information and transmits the index information to the decoder according to an embodiment of the present invention.

Neighboring blocks of the current block are sequentially searched and, when inter-view motion vectors are obtained from the neighboring blocks, the obtained inter-view motion vectors are sequentially stored to generate an inter-view motion vector candidate list (S800). The inter-view motion vector candidate list can be generated using the same method as in the aforementioned step S700.

Index information corresponding to an inter-view motion vector used to acquire the inter-view motion vector of the current block, from among inter-view motion vector candidates, is generated (S810). The encoder can determine an inter-view motion vector most suitable to code the current block from among the inter-view motion vector candidates in the inter-view motion vector candidate list. For example, predicted values of the current block are obtained respectively using the inter-view motion vector candidates in the interview motion vector candidate list and compared with pixel values of the original image, and an inter-view motion vector candidate corresponding to the predicted value of the current block, which forms a smallest difference with the pixel values of the original image, can be determined as the inter-view motion vector of the current block.

The encoder can transmit the generated index information to the decoder through a bitstream (S820).

A description will be given of an exemplary inter-view motion vector candidate list with reference to FIG. 9.

FIG. 9 illustrates an exemplary inter-view motion vector candidate list according to an embodiment of the present invention.

As described above, the inter-view motion vector candidate list is a list including inter-view motion vectors used to code neighboring blocks, as described above. The inter-view motion vectors included in the inter-view motion vector candidate list can be candidates for the inter-view motion vector of the current block. An inter-view motion vector can be included in the inter-view motion vector candidate list in such a manner that only the horizontal component thereof is stored or both the horizontal and vertical components thereof are stored. Alternatively, information about a neighboring block from which an inter-view motion vector is obtained may be included in the inter-view motion vector candidate list.

For example, spatial neighboring blocks of the current block, which have been coded using inter-view motion vectors, are searched in the order of a left neighboring block, an upper neighboring block and an upper left neighboring block, index information 0 can indicate the left neighboring block, index information 1 can indicate the upper neighboring block and index information 2 can indicate the upper left neighboring block in the interview motion vector candidate list shown in FIG. 9.

The encoder can generate the inter-view motion vector candidate list through the aforementioned method and search inter-view motion vectors included in the inter-view motion vector candidate list for a most suitable inter-view motion vector. The encoder can transmit index information corresponding to a neighboring block coded using the most suitable inter-view motion vector to the decoder.

The decoder can generate the inter-view motion vector candidate list through the aforementioned method as does the encoder. In addition, the decoder may acquire the index information from the encoder or obtain a most suitable inter-view motion vector from inter-view motion vectors included in the inter-view motion vector candidate list.

As described above, the decoding/encoding apparatus to which the present invention is applied may be included in a multimedia broadcast transmission/reception apparatus such as a DMB (digital multimedia broadcast) system to be used to decode video signals, data signals and the like. In addition, the multimedia broadcast transmission/reception apparatus may include a mobile communication terminal.

The decoding/encoding method to which the present invention is applied may be implemented as a computer-executable program and stored in a computer-readable recording medium and multimedia data having a data structure according to the present invention may also be stored in a computer-readable recording medium. The computer-readable recording medium includes all kinds of storage devices storing data readable by a computer system. Examples of the computer-readable recording medium include a ROM, a RAM, a CD-ROM, a magnetic tape, a floppy disk, an optical data storage device, and a medium using a carrier wave (e.g. transmission through the Internet). In addition, a bitstream generated according to the encoding method may be stored in a computer-readable recording medium or transmitted using a wired/wireless communication network.

### [Industrial Applicability]

The present invention can be used to code a video signal.

## Claims

1. A method for processing video signals, comprising:
acquiring a first inter-view motion vector from one of a left neighboring block and a lower left neighboring block of a current block;
acquiring a second inter-view motion vector from one of an upper neighboring block, an upper right neighboring block and an upper left neighboring block of the current block;
acquiring inter-view motion vector flag information; and
determining one of the first inter-view motion vector and the second inter-view motion vector as an inter-view motion vector of the current block on the basis of the interview motion vector flag information.

2. The method according to claim 1, further comprising:
determining whether the left neighboring block is a block coded using an inter-view motion vector; and
determining whether the lower left neighboring block is a block coded using an inter-view motion vector when the left neighboring block is not a block coded using an inter-view motion vector.

3. The method according to claim 1, further comprising:
determining whether the upper neighboring block is a block coded using an interview motion vector;
determining whether the upper right neighboring block is a block coded using an inter-view motion vector when the upper neighboring block is not a block coded using an inter-view motion vector; and
determining whether the upper left neighboring block is a block coded using an inter-view motion vector when the upper right neighboring block is not a block coded using an inter-view motion vector.

4. The method according to claim 1, further comprising, when at least one temporal neighboring block of the current block is a block coded using an inter-view motion vector, acquiring a third inter-view motion vector from the temporal neighboring block,
wherein the determining of the inter-view motion vector of the current block comprises acquiring the inter-view motion vector of the current block using one of the first inter-view motion vector, the second inter-view motion vector and the third inter-view motion vector.

5. The method according to claim 4, wherein the temporal neighboring block includes at least one of a co-located block and a coding block including a neighboring block of the co-located block.

6. A method for processing video signals, comprising:
searching spatial neighboring blocks of a current block for a block coded using an inter-view motion vector;
generating an inter-view motion vector candidate list using the inter-view motion vector of the searched spatial neighboring block;
acquiring index information for obtaining an inter-view motion vector of the current block; and
acquiring the inter-view motion vector of the current block using the inter-view motion vector candidate list and the index information.

7. The method according to claim 6, wherein the spatial neighboring blocks include a left neighboring block, an upper neighboring block, an upper right neighboring block, a lower left neighboring block and an upper left neighboring block,
wherein the searching of the spatial neighboring blocks of the current block for a block coded using an inter-view motion vector comprises searching the spatial neighboring blocks of the current block for a block coded using an inter-view motion vector in the order of the left neighboring block, the upper neighboring block, the upper right neighboring block, the lower left neighboring block and the upper left neighboring block.

8. The method according to claim 6, further comprising:
searching temporal neighboring blocks of the current block for a block coded using an inter-view motion vector; and
storing the inter-view motion vector of the searched temporal neighboring block in the inter-view motion vector candidate list.

9. The method according to claim 8, wherein the temporal neighboring blocks include at least one of a co-located block and a coding block including a neighboring block of the co-located block.

10. A video decoding apparatus, comprising an inter prediction unit for acquiring a first inter-view motion vector from one of a left neighboring block and a lower left neighboring block of a current block, acquiring a second inter-view motion vector from one of an upper neighboring block, an upper right neighboring block and an upper left neighboring block of the current block, acquiring inter-view motion vector flag information, and determining one of the first inter-view motion vector and the second inter-view motion vector as an interview motion vector of the current block on the basis of the inter-view motion vector flag information.

11. The video decoding apparatus according to claim 10, wherein the inter prediction unit determines whether the left neighboring block is a block coded using an inter-view motion vector and determines whether the lower left neighboring block is a block coded using an inter-view motion vector when the left neighboring block is not a block coded using an inter-view motion vector.

12. The video decoding apparatus according to claim 10, wherein the inter prediction unit determines whether the upper neighboring block is a block coded using an inter-view motion vector, determines whether the upper right neighboring block is a block coded using an inter-view motion vector when the upper neighboring block is not a block coded using an inter-view motion vector, and determines whether the upper left neighboring block is a block coded using an inter-view motion vector when the upper right neighboring block is not a block coded using an inter-view motion vector.

13. The video decoding apparatus according to claim 10, wherein, when at least one temporal neighboring block of the current block is a block coded using an inter-view motion vector, the inter prediction unit acquires a third inter-view motion vector from the temporal neighboring block, and acquires the inter-view motion vector of the current block using one of the first inter-view motion vector, the second inter-view motion vector and the third inter-view motion vector.

14. The video decoding apparatus according to claim 13, wherein the temporal neighboring block includes at least one of a co-located block and a coding block including a neighboring block of the co-located block.

15. A video decoding apparatus, comprising an inter prediction unit for searching spatial neighboring blocks of a current block for a block coded using an inter-view motion vector, generating an inter-view motion vector candidate list using the inter-view motion vector of the searched spatial neighboring block, acquiring index information for obtaining an interview motion vector of the current block, and acquiring the inter-view motion vector of the current block using the inter-view motion vector candidate list and the index information.

16. The video decoding apparatus according to claim 15, wherein the spatial neighboring blocks include a left neighboring block, an upper neighboring block, an upper right neighboring block, a lower left neighboring block and an upper left neighboring block,
wherein the inter prediction unit searches the spatial neighboring blocks of the current block for a block coded using an inter-view motion vector in the order of the left neighboring block, the upper neighboring block, the upper right neighboring block, the lower left neighboring block and the upper left neighboring block.

17. The video decoding apparatus according to claim 15, wherein the inter prediction unit searches temporal neighboring blocks of the current block for a block coded using an inter-view motion vector and stores the inter-view motion vector of the searched temporal neighboring block in the inter-view motion vector candidate list.

18. The video decoding apparatus according to claim 17, wherein the temporal neighboring blocks include at least one of a co-located block and a coding block including a neighboring block of the co-located block.
